(19) Europäisches Patentamt / European Patent Office / Office européen des brevets

(11) **EP 3 059 914 B1**

(12) **EUROPEAN PATENT SPECIFICATION**

(45) Date of publication and mention of the grant of the patent:
**08.08.2018  Bulletin 2018/32**

(51) Int Cl.:
**H04L 25/03** *(2006.01)*

(21) Application number: **15155581.0**

(22) Date of filing: **18.02.2015**

(54) **Method and a device for computing a soft estimate of coded bits forming transmitted symbol vectors**

Verfahren und Vorrichtung zur Berechnung einer weichen Schätzung von codierten Bits mittels Bildung von übertragenen Symbolvektoren

Procédé et dispositif pour calculer une estimation de mou de bits codés formant des vecteurs de symboles transmis

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.08.2016  Bulletin 2016/34**

(73) Proprietors:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **Gresset, Nicolas**
**35708 Rennes Cedex 7 (FR)**

(74) Representative: **Cabinet Le Guen Maillet**
**3, impasse de la Vigie**
**CS 71840**
**35418 Saint-Malo Cedex (FR)**

(56) References cited:
**EP-A1- 1 492 241    EP-A2- 1 912 396**

• **HOSSEIN NAJAFI ET AL: "Adaptive soft-output detection in MIMO systems", COMMUNICATION, CONTROL, AND COMPUTING, 2008 46TH ANNUAL ALLERTON CONFERENCE ON, IEEE, PISCATAWAY, NJ, USA, 23 September 2008 (2008-09-23), pages 1354-1358, XP031435314, ISBN: 978-1-4244-2925-7**
• **KOT A C ET AL: "Multiple-Antenna Differential Lattice Decoding", IEEE JOURNAL ON SELECTED AREAS IN COMMUNICATIONS, IEEE SERVICE CENTER, PISCATAWAY, US, vol. 23, no. 9, 1 September 2005 (2005-09-01), pages 1821-1829, XP011138717, ISSN: 0733-8716, DOI: 10.1109/JSAC.2005.853795**
• **Nicolas Gresset: "Nouvelles techniques de codage spatio-temporel avec des modulations codées à bits entrelacés", Thèse présentée pour obtenir le grade de Docteur de l'École Nationale Supérieure des Télécommunications, 13 September 2004 (2004-09-13), pages 1-188, XP055085719, Retrieved from the Internet: URL:http://gresset.nicolas.free.fr/2004_12 _phdthesis_gresset.pdf [retrieved on 2013-10-29]**

**Description**

The present invention relates generally to a method and a device for computing a soft estimate of coded bits forming transmitted symbol vectors received by a receiver from a source through a channel.

Multi antennas technique, named MIMO (Multiple Input Multiple Output) may be used for digital video broadcasting systems. For example, a two stream MIMO scheme enables to increase twice the data rate of the broadcasting system.

The increase of the number of transmit antennas allows an improvement of the system robustness at the price of a drastic increase of the receiver complexity.

Many types of MIMO detectors have been investigated like Hard output or Soft output detectors. Soft output/Soft-input allows turbo-detection and decoding.

Let us consider the transmission of $N$ symbols of a Quadrature Amplitude Modulation QAM constellation over a linear channel with $N$ inputs and $M$ outputs, represented by a $M \times N$ complex matrix **H**.

At the receiver, a vector of $M$ complex Gaussian entries is added to the linear observation **Hz,** which leads to the following channel model :

$$\mathbf{y} = \mathbf{Hz} + \mathbf{\eta}$$

where $E[\mathbf{zz}^\dagger] = \rho\mathbf{I}_N$ and $E[\mathbf{\eta\eta}^\dagger] = \mathbf{I}_M$, $\mathbf{x}^\dagger$ denotes the transpose conjugate of x and $\rho$ denotes by definition the Signal to Noise Ratio (SNR) and $\mathbf{I}_N$ is a NxN identity matrix.

The symbol $z_i$ is the $i$-th entry of the vector **z** and belongs to a Quatrature Amplitude Modulation QAM of size $2^{si}$ and carries a number $s_i$ of coded bits. Let us assume here that the constellation symbols have their real and imaginary parts belonging to the set of integers $\{0,1, ... , 2^{s_i/2} - 1\}$.

Such a definition of the QAM modulation is not centered. If we define $\mathbf{y}^{(c)}$ and $\mathbf{z}^{(c)}$ as the received and QAM symbols vectors and $\mathbf{H}^{(c)}$ as the equivalent channel when a centered QAM modulation is transmitted, then we have the following relationship with the received and QAM symbols vectors and equivalent channel when a non-centered QAM modulation is transmitted:

$$H_{i,j}^{'} = H_{i,j}/2$$

$$y_i^{(c)} = y_i - \frac{1}{2}\sum_j H_{i,j} \left(2^{\frac{s_j}{2}} - 1\right)\left(1 + \sqrt{-1}\right)$$

where $\sqrt{-1}$ denotes the imaginary unit.

For each transmission on the above model, the coded bits are a subset of a larger vector of coded bits produced by an encoding step from a vector of information bits that carry the data to be transmitted.

The binary labeling that converts a vector of coded bits **c** into the vector of modulation symbols **z** is denoted $\Omega(.)$, such that $\Omega(\mathbf{c}) = \mathbf{z}$, $\Omega^{-1}(\mathbf{z}) = \mathbf{c}$ and $\Omega_j^{-1}(\mathbf{z}) = c_j$ which is the j-th bit of the vector of coded bits c. The multi-dimensional QAM constellation is called

$$\mathcal{C} = \{\mathbf{z}\},$$

i.e., is the set of all possible vectors of symbols **z.**

Some receivers perform a soft output estimation of the coded bits, but also take soft input *a priori* information from the output of a previous iteration of decoding of the error correcting code. The receivers provide soft estimates to an input of a soft-input soft-output decoder that produces estimates on the information bits but also soft-output estimates on the coded bits that are fed back to the soft output detector in the next iteration of decoding.

The optimal soft-input soft-output detector associated to the model above, when the noise has a Gaussian distribution, computes an extrinsic Log-Likehood Ratio $LLR_j$ of the $j$-th coded bits associated to $\mathbf{z}$ by performing the following operations

$$LLR_j = \log \frac{\sum_{\mathbf{z}' \in \{\mathbf{z} \in \mathcal{C} \mid \Omega_j^{-1}(\mathbf{z}) = 1\}} e^{-\rho \|\mathbf{y} - \mathbf{Hz}'\|^2/2} \prod_{u \neq j} |1 - \pi_u - \Omega_u^{-1}(\mathbf{z}')|}{\sum_{\mathbf{z}'' \in \{\mathbf{z} \in \mathcal{C} \mid \Omega_j^{-1}(\mathbf{z}) = 0\}} e^{-\rho \|\mathbf{y} - \mathbf{Hz}''\|^2/2} \prod_{v \neq j} |1 - \pi_v - \Omega_v^{-1}(\mathbf{z}'')|}$$

where $\pi_j$ is the *a priori* probability that the *j*-th coded bit is equal to 1, as provided by the soft-ouput decoder in a previous operation of decoding and initialized to 0.5 at the first iteration of decoding.

We can observe that the computation of each *LLR* requires the computation of $2^{\sum_{i=1}^{N} s_i}$ distances $\| \mathbf{y} - \mathbf{Hz}' \|^2$.

Each distance requires $(N + 1)$. $M$ multiplications and $N + M$ - 1 additions.

Thus, when the number of channel input $N$ is high, the complexity is high.

Furthermore, if the total spectral efficiency $\sum_{i=1}^{N} s_i$ is large, the complexity may be intractable.

Another option to reach quasi-optimality with low complexity is to draw a list of vectors leading to the most significant terms of the sum in the computation of the Log-Likelihood Ratio LLR. The computation is then performed only on the list of vectors. Only the candidate vectors $\mathbf{z}'$ E $C$ are considered that leads to a bounded value of $\| \mathbf{y} - \mathbf{Hz}' \| < R$.

This is equivalent to list all the vectors $\mathbf{Hz}'$ belonging to the hypersphere of radius $R$ centered around the vector $\mathbf{y}$. The vectors of $\mathbf{Hz}'$ belong to a multi-dimensional parallelotope which is the transformation of the multi-dimensional QAM modulation transmitted on the linear channel $\mathbf{H}$. Also, these vectors form a constellation having $\mathbf{H}$ as generator matrix. Such a so-called list sphere decoder provides near optimal performance but has major drawbacks that put a stop to a practical implementation in chipsets as the number of vectors in the list highly varies from one noise sample to another or when each channel realization changes.

Another possibility is to first perform a hard-output estimation $\hat{\mathbf{z}}$ of $\mathbf{z}$ and to center the list on $\mathbf{H}\hat{\mathbf{z}}$ instead of $\mathbf{y}$, leading to the so-called shifted list sphere decoder. For reasonable complexity, this approach shows better performance but still requires a dynamic list when the channel changes. However, when the channel stays constant, the list can be generated around the origin of the lattice and shifted around the estimate $\mathbf{H}\hat{\mathbf{z}}$ obtained in a first step of hard detection, the shifting approach being relevant by using the linearity property of lattices.

The paper of Hossein NAJAFI entitled "Adaptative soft-output detection in MIMO systems" published in in Communication, Control and computing in 2008 46th annual Allerton conference on IEEE, Piscataway, NJ, USA discloses soft output detection using an adaptive list sphere decoder.

The present invention aims at providing a method and a device which enable to reduce the complexity of the computing of a soft estimate of coded bits forming transmitted symbol vectors received by a receiver from a source through a channel.

The scope of the present invention is defined by the appended independent claims with preferred embodiments defined by the dependent claims. To that end, the present invention concerns a method for computing a soft estimate of coded bits forming transmitted symbol vectors of a multi-dimentional constellation, the transmitted vectors being received by a receiver from a source through a channel, characterized in that the method comprises the steps of:

- obtaining from the receiver memory a predetermined list of vectors with integer or gaussian integer entries,
- obtaining a channel matrix estimation between the source and the receiver and received symbols,
- obtaining a reduced channel matrix and a change of basis matrix from the channel matrix estimation,
- computing a vector with integer coordinates at least from the reduced channel matrix and the received symbols,
- shifting the predetermined list of vectors around the vector with integer coordinates and obtaining a shifted list of vectors,
- computing a soft estimation of the coded bits according to vectors belonging to the shifted list of vectors and to a transformed multi-dimensional constellation obtained from the multi-dimensional constellation and the change of basis matrix.

The present invention also concerns a device for computing a soft estimate of coded bits forming transmitted symbol vectors of a multi-dimentional constellation, the transmitted vectors being received by a receiver from a source through a channel, characterized in that the device comprises:

- means for obtaining from the receiver memory a predetermined list of vectors with integer or gaussian integer entries,
- means for obtaining a channel matrix estimation between the source and the receiver and received symbols,
- means for obtaining a reduced channel matrix and a change of basis matrix from the channel matrix estimation,
- means for computing a vector with integer coordinates at least from the reduced channel matrix and the received symbols,
- means for shifting the predetermined list of vectors around the vector with integer coordinates and obtaining a shifted list of vectors,
- means for computing a soft estimation of the coded bits according to vectors belonging to the shifted list of vectors and to a transformed multi-dimentional constellation obtained from the multi-dimentional constellation and the change of basis matrix.

Thus, the implementation of the receiver is made easy. It is then possible to implement the soft estimate in chipsets.

According to a particular feature, the predetermined list of vectors is a spherical predetermined list of vectors or a cubical list of vectors.

Thus, the sub-optimality of considering only a list of vectors instead of all vectors is limited.

According to a particular feature, the vector with integer coordinates is obtained by successively applying an MMSE filter computed from the reduced channel matrix and performing a rounding to integer values.

Thus, the list is centered on a good candidate vector that improves the performance of the system.

According to a particular feature, a change of basis matrix is further obtained from the channel matrix estimation and the vector with integer coordinates is further computed from the change of basis matrix.

Thus, the list is centered on an even better candidate vector that improves the performance of the system.

According to a particular feature, the reduced channel matrix is obtained by computing a channel reduction algorithm.

Thus, the reduced channel matrix is adapted to the current channel estimation.

According to a particular feature, the reduced channel matrix is obtained by selecting one reduced channel or one change of basis matrix from a set of pre-computed reduced channel or of change of basis matrices according to a given figure of merit.

Thus, the complexity required for obtaining the reduced channel matrix is highly reduced.

According to a particular feature, the figure of merit is the value of a trace of a matrix obtained by a multiplication of the inverse of the reduced channel matrix by the conjugate transpose of the inverse of the reduced channel matrix.

Thus, the reduced channel matrix is well adapted to the current channel estimation.

According to a particular feature, the figure of merit is determined from an upper triangular matrix obtained by a decomposition of the reduced channel matrix into a unitary matrix and the upper triangular matrix.

Thus, the reduced channel matrix is well adapted to the current channel estimation.

According to a particular feature, the set of reduced channel or change of basis matrices is obtained from an offline pre-processing of channel reduction algorithms on a random set of channel matrices.

Thus, the set of good reduced channel matrix is easy to determine.

According to a particular feature, the offline pre-processing of channel reduction algorithms on a random set of channel matrices is performed, a given number of times, by obtaining a set of candidate matrices of change of basis matrix, by initializing the set of candidate matrices to an empty set, and an associated vector of probabilities to an empty vector, by generating randomly a channel matrix according to an expected distribution of channels, with centered and unit variance entries, by applying a lattice reduction in order to obtain a change of basis matrix, by adding the obtained change of basis matrix to the set of candidate matrices if the obtained change of basis matrix is not already in the set of candidate matrices or by modifying a probability associated to the obtained change of basis matrix, and selecting a predetermined number of change of basis matrices of the set of candidate matrices having the highest probability.

According to a particular feature, the offline pre-processing of channel reduction algorithms on a random set of channel matrices is performed, a given number of times, by obtaining a set of candidate matrices of reduced channel matrices, by initializing the set of candidate matrices to an empty set and an associated vector of probabilities to an empty vector, by generating randomly a channel matrix according to an expected distribution of channels, with centered and unit variance entries, by applying a lattice reduction in order to obtain a reduced channel matrix, by adding the obtained reduced channel matrix to the set of candidate matrices if the obtained reduced channel matrix is not already in the set of candidate matrices or by modifying a probability associated to the obtained reduced channel matrix, and selecting a predetermined number of reduced channel matrix matrices of the set of candidate matrices having the highest probability.

According to a particular feature, the channel matrices are cyclotomic precoded diagonal channels and the set of reduced channel matrix is obtained from an offline pre-processing on a cyclotomic field of the cyclotomic rotation.

Thus, the set of good reduced channel matrix is easy to determine and provides very good performance with a limited set cardinality.

According to a particular feature, the computing of the soft estimation of the coded bits according the constellation vectors belonging to the shifted list of vectors is performed by a multiplying of the inverse of the change of basis matrix by the vector with integer coordinates.

According to a particular feature, the computing of the soft estimation of the coded bits according the constellation vectors belonging to the shifted list of vectors is performed using received transmitted symbol vectors through the channel.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless system in which the present invention is implemented;
Fig. 2 is a diagram representing the architecture of a receiver in which the present invention is implemented;
Fig. 3 represents an algorithm for performing soft estimation of receveid coded bits based on a quantized list alphabet for a shifted list sphere decoder;
Figs. 4 represent a geometrical explanation of the constellation transformations by the channel and a lattice reduction.

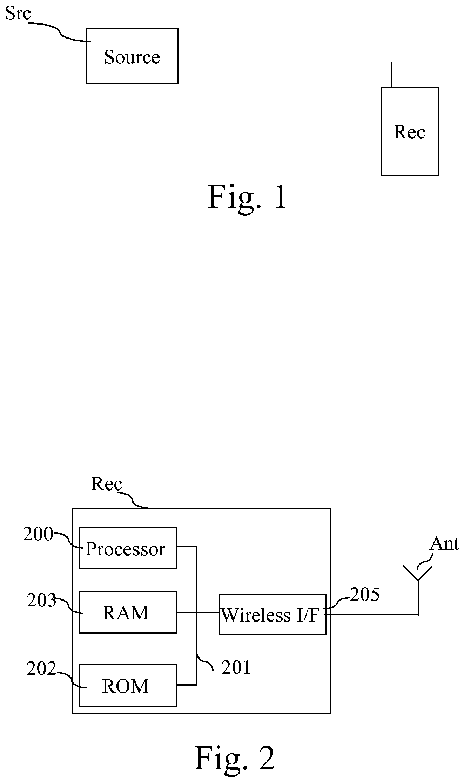

**Fig. 1** represents a wireless system in which the present invention is implemented.

The present invention will be disclosed in an example in which the signals transferred by a source Src are transferred to receivers Rec.

For example, the source Src may be included in a satellite or in a terrestrial transmitter and broadcasts signals to at least one receiver, the source Src may also transfer signals to a single receiver Rec.

The receiver Rec may be a mobile terminal to which data like video signals are transferred.

In order to improve the performance of hard output receivers, lattice reductions may be used. A lattice reduction is performed each time the channel **H** changes, which provides the following decomposition:

$$\mathbf{H} = \mathbf{H}_r \mathbf{T}$$

where $\mathbf{H}_r$ is reduced for example according to Minkovski, Korkine-Zolotarev, or Lenstra Lenstra Lovasz reductions, which involves that $\mathbf{H}_r$ generates the same lattice as **H** but has more orthogonal basis vectors.

The change of basis matrix **T** is unimodular with integer, or Gaussian integer in the complex input case, entries, which involves that the absolute value of the basis matix determinant is one, and that the inverse of the basis matrix has integer, or Gaussian integer in the complex case, entries.

By definition, we note the transformed multi-dimensional constellation $\mathcal{C}_R$ = {**Tz**}, i.e., is the set of all possible vectors of symbols **x** = **Tz**.

Thus, the hard output decoder usually performs a hard output decision based on the channel model **y** = $\mathbf{H}_r$**x** + $\eta$ and then uses the relationship **x** = **Tz** for obtaining an estimate on **z** by using a linear decoder. The performance of such detectors is good, which involves that the orthogonality assumption is quite good. The lattice reduction step has a high complexity, but can be mutualized between several decoding steps as soon as the channel does not change. This can be combined with the shifted list decoder as a pre-processing step.

The present invention, first takes benefit of the almost-orthogonality provided by lattice reductions. Indeed, after applying the lattice decomposition **H** = $\mathbf{H}_r$**T,** one can obtain the following channel model

$$\mathbf{H}_r^{-1}\mathbf{y} = \mathbf{Tz} + \eta'$$

where $\eta'$ can be approximated as a white Gaussian noise and the new SNR as $p'$.

This channel model is by definition called RCM for *Reduced Channel Model* or channel model after latice reduction by opposition to the OCM for *Observation Channel Model* corresponding to the case where no latice reduction is performed.

According to the invention, the receiver Rec computes a soft estimate of coded bits forming transmitted symbol vectors of a multi-dimentional constellation, the transmitted vectors being received by a receiver from a source through a channel by:

- obtaining from the receiver memory a predetermined list of vectors with integer or gaussian integer entries,
- obtaining a channel matrix estimation between the source and the receiver and received symbols,
- obtaining a reduced channel matrix and a change of basis matrix from the channel matrix estimation,
- computing a vector with integer coordinates at least from the reduced channel matrix and the received symbols,
- shifting the predetermined list of vectors around the vector with integer coordinates and obtaining a shifted list of vectors,
- computing a soft estimation of the coded bits according to vectors belonging to the shifted list of vectors and to a transformed multi-dimentional constellation obtained from the multi-dimentional constellation and the change of basis matrix.

**Fig. 2** is a diagram representing the architecture of a receiver in which the present invention is implemented.

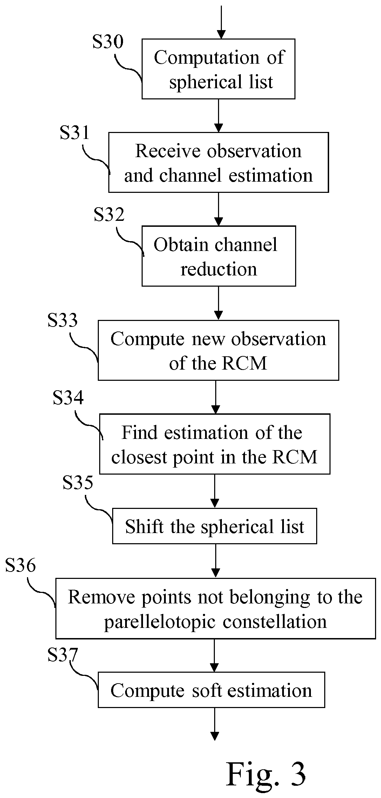

The receiver Rec has, for example, an architecture based on components connected together by a bus 201 and a processor 200 controlled by the program as disclosed in Fig. 3.

It has to be noted here that the receiver Rec may have an architecture based on dedicated integrated circuits.

The bus 201 links the processor 200 to a read only memory ROM 202, a random access memory RAM 203 and a wireless interface 205.

The memory 203 contains registers intended to receive variables and the instructions of the programs related to the algorithm as disclosed in Fig. 3.

The processor 200 controls the operation of the wireless interface 205.

The read only memory 202 contains instructions of the program related to the algorithm as disclosed in Fig. 3, which are transferred, when the receiver Rec is powered on, to the random access memory 203.

Any and all steps of the algorithm described hereafter with regard to Fig. 3 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the receiver Rec includes circuitry, or a device including circuitry, causing the receiver Rec to perform the steps of the algorithm described hereafter with regard to Fig. 3.

**Fig. 3** represents an algorithm for performing soft estimation of received coded bits based on a quantized list alphabet for a shifted list sphere decoder.

More precisely, the present algorithm is executed by the processor 200 of the receiver Rec.

At step S30, the processor 200 performs an offline computation of a predetermined list of vectors

$$\mathcal{L} \subset \mathbb{Z}[\sqrt{-1}]^N.$$

For example, the processor 200 uses the method as disclosed in the paper of U. Finkce and M. Pohst entitled "Improved Methods for calculating Vectors of short length in a Lattice including a complexity analysis" published in Mathematics of computation vol 44 pp 463 in 1985 in order to obtain a spherical list of vectors around the origin of the lattice. The predetermined list can be of other form, like cubical by listing all the vectors of $\mathbb{Z}[\sqrt{-1}]^N$ belonging to a cubic shape, i.e., the real and imaginary parts of the entries of which being bounded by a lower and upper bound. The size of the list is selected to match a target complexity, or size of chipset in FPGA implementations.

At next step S31, the processor 200 obtains observation **y** and matrix channel estimation **H** from the wireless interface I/F 205.

The vector **y** may be received across several antennas, time slots, or sub-carriers according to the definition of the transmission model.

The channel estimation **H** is for example obtained by a preceding channel estimation step that allows to estimate each coefficient of **H,** for example by the use of pilot symbols sent by the source Src.

In a MIMO channel, the source Src has $N$ transmit antennas and the receiver Rec has M receive antennas. The coefficients of the $M \times N$ matrix **H** are considered as gaussian independent identically distributed with zero mean unity variance.

In case of a Precoded diagonal fading channel, the Source Src linearly combines $M = N$ QAM symbols with a $M \times M$ precoding matrix $\Phi$ and sends each of the M linear combinations in parallel on one of M fading channels. The parallel transmission is represented by a diagonal $M \times M$ matrix $\Delta$**,** where $\Delta_{i,i}$ is the i-th diagonal coefficient of $\Delta$ and represents the fading of the i-th parallel fading channel.

Thus, the $M \times M$ matrix **H** represents the concatenation of the precoding step and the transmission on the parallel fading channels as **H** = ΔΦ.

At next step S32, the processor 200 computes a channel reduction **H** = **H**$_r$**T**. **H**$_r$ is the reduced channel matrix and **T** is the change of basis matrix. The computation of the channel reduction that provides matrices **H**$_r$ and **T** from the matrix **H** such that **H** = **H**$_r$**T** is obtained from an LLL reduction as disclosed, for example, in the paper of A Lenstra, H Lenstra and L. Lovasz entitled "Factoring polynomials with rational coefficients" in Mathematische Annalen, vol 261, pp 515-532 1982.

The channel reduction is for example computed as disclosed in the paper of C. Ling W. H Mow and N. Howgrave-Graham entitled "Variants of the LLL algorithm in digital communications. Complexity analysis and fixed complexity implementation" Computing Research Repository vol abs/1006. 1661, 2010.

The channel reduction is for example computed as disclosed in the paper of C.P Schnorr entitled "A hierarchy of polynomial time lattice basis reduction algorithms" Theoretical Computer Science, vol 53, pp 201-224, 1987.

In a variant of realization, the processor 200, in order to enable complexity reduction in the receiver Rec, defines offline a set of candidate matrices **T** that are stored in memory without using a lattice reduction algorithm online.

The processor 200 obtains the channel matrix **H,** performs a loop on a predefined number of candidate change of basis matrices **T** belonging to a set $\mathcal{B}$ of candidate matrices **T,** computes, for each candidate change of basis matrice **T,** the reduced channel **H**$_r$ = **HT**$^{-1}$ and the processor 200 defines a figure of merit for example as :

- the value of $trace(\mathbf{H}_r^{-1}\mathbf{H}_r^{-\dagger})$ that is minimized and † is the transpose conjuguate operator,

- the value defined by $\sum_j \sum_{i=1}^{j-1} |R_{i,j}/R_{i,i}|^2$ that is maximized, where the matrix **R** is obtained by the QR decomposition **H**$_r$ = **QR** where **Q** is unitary and **R** is upper-triangular.

The processor 200 selects the couple (**T**, **H**$_r$) that optimizes the figure of merit. The processor 200 obtains the set $\mathcal{B}$ of candidate matrices **T** in an offline optimization by initializing the set of candidate matrices **T** to an empty set, and an associated vector of probabilities to an empty vector. The processor 200 generates randomly the channel matrix **H** according to the expected distribution of channels, for example, according to an independent identically distributed complex Gaussian multivariate distribution, with centered and unit variance entries. The processor 200 then applies a lattice reduction, as already disclosed in order to obtain **T** and **H**$_r$. The processor obtains a candidate matrix **T** as a result of the reduction and adds the obtained matrix **T** to the set $\mathcal{B}$ of candidate matrices **T** if the obtained candidate matrix is not already in the set $\mathcal{B}$ of candidate matrices **T** or modifies a probability of occurrence associated to the obtained matrix. The processor 200 repeats the operation a given number of times. Finally, the processor 200 selects a given number of matrices **T** of the set $\mathcal{B}$ of candidate matrices **T** having the highest probability.

In a variant of realization, in order to enable complexity reduction in the receiver Rec, the processor 200 defines offline a set of candidate matrices **H**$_r$ that are stored in memory without using a lattice reduction algorithm online. The processor 200 obtains the channel matrix **H,** performs a loop on a predefined number of candidate matrices **H**$_r$ belonging to a set B' of candidate matrices **H**$_r$', computes, for each candidate matrix **H**$_r$, the candidate change of basis matrice

$$\mathbf{T} = [\![\mathbf{H}_r^{-1}\mathbf{H}]\!]$$

where

$$[\![.]\!]$$

denotes a rounding of each coefficient of the candidate change of basis matrix to the closest integer value or gaussian integer and the processor 200 defines a figure of merit for example as the value of *trace*(**TH**$^{-1}$**H**$^{-\dagger}$**T**$^{\dagger}$) that is minimized.

The processor 200 selects the couple (**T**, **H**$_r$) that optimizes the figure of merit.

The processor 200 obtains a set $\mathcal{B}'$ of candidate matrices **H**$_r$ in an offline optimization by initializing the set of candidate matrices **H**$_r$ matrices to an empty set, and an associated vector of probabilities to an empty vector. The processor 200 generates randomly the channel matrix **H** according to the expected distribution of channels, for example, according to an independent identically distributed complex Gaussian multivariate distribution, with centered and unit variance entries. The processor 200 then applies a lattice reduction, as already disclosed in order to obtain **T** and **H**$_r$.

The processor 200 obtains a candidate matrix $\mathbf{H}_r$ as a result of the reduction and adds the obtained matrix $\mathbf{H}_r$ to the set $\mathcal{B}'$ of candidate matrices $\mathbf{H}_r$ if the obtained candidate matrix is not already in the set $\mathcal{B}'$ of candidate matrices $\mathbf{H}_r$ or modifies a probability associated to the obtained matrix. The processor 200 repeats the operation a given number of times. Finally, the processor 200 selects a given number of matrices $\mathbf{H}_r$ of the set $\mathcal{B}'$' of candidate matrices $\mathbf{H}_r$ having the highest probability.

If the channel matrices are cyclotomic precoded diagonal channels, the set of reduced channel matrix $\mathcal{B}'$ is obtained from an offline pre-processing on the cyclotomic field of the cyclotomic rotation.

Indeed, if $\Phi$ is a cyclotomic rotation, we consider a set $\mathcal{F}$ of candidate matrices $\Delta_q$ associated to the units of the cyclotomic field. The units can be built from the set *of n'* fundamental units {$\mathbf{u}_i$} represented as vectors of size n.

For each fundamental unit, the processor 200 defines a diagonal matrix $\mathbf{B}_i$ which diagonal elements are defined by $diag\mathbf{B}_i = \sqrt{n}\Phi\mathbf{u}_i$, where the notation *diag* is extracting the diagonal elements of a matrix A into a vector *diag*$\mathbf{A}$ = $[A_{1,1}, ..., A_{n,n}]^T$, where $A_{i,i}$ is the ith element of the ith row and column.

Finally, one can show that

$$\forall\boldsymbol{\Delta}_q \in \mathcal{F}, \exists\mathbf{k} \in \mathbb{Z}[\sqrt{-1}]^{n'}, \boldsymbol{\Delta}_q = \prod_i \mathbf{B}_i^{k_i}$$

Where n' is a parameter lower or equal than n.

Thus, the processor 200 builds a set $\mathcal{F}$ of candidates matrices $\Delta_q$ from a set of lattice vectors selected for example at random, or in other words from a random set of $\mathbf{k}$ vectors. Then, for each channel estimation $\mathbf{H}$, the processor 200 computes $\Delta = \Phi^\dagger\mathbf{H}$, and selects a candidate $\Delta_q$ from $\mathcal{F}$ such that

$$\boldsymbol{\Delta} = \boldsymbol{\xi}\boldsymbol{\Delta}_q$$

where $\xi$ is the quantization error of $\Delta$ into $\Delta_q$, and for example such that the value $\max_i(|\log(|\xi_i|)|)$ is minimized.

Then, the algebraic property of the cyclotomic rotation gives $\mathbf{T} = \Phi^\dagger\Delta_q\Phi$ and $\mathbf{H}_r = \xi\Phi$, which allows to get the set $\mathcal{B}'$ of matrices $\mathbf{T}$ from the set $\mathcal{F}$ of $\Delta_q$.

At next step S33, the processor 200 computes the new observation of the RCM $\mathbf{y}' = \mathbf{H}_r^{-1}\mathbf{y}$.

The new observation of the RCM $\mathbf{y}' = \mathbf{H}_r^{-1}\mathbf{y}$ is computed from the received observation $\mathbf{y}$ obtained at step S31 and the inverse of the reduced channel $\mathbf{H}_r$ obtained at step S32.

At next step S34, the processor 200 determines an estimation $\hat{\mathbf{x}}$ of the closest vector of $\mathbf{y}'$ in the RCM. The estimation $\hat{\mathbf{x}}$ is a vector with integer coordinates.

The estimation $\hat{\mathbf{x}}$ of the closest vector of $\mathbf{y}'$ in the RCM is for example obtained by first applying an MMSE filter on $\mathbf{y}$ based on the OCM, followed by a decision which is then multiplied by $\mathbf{T}$ in order to get $\hat{\mathbf{x}}$.

The estimation $\hat{\mathbf{x}}$ of the closest vector of $\mathbf{y}'$ in the RCM is for example obtained by taking the closest integer value (independently on the real and imaginary part if in complex dimension), i.e., by first computing $\mathbf{x}'$

$$\forall i \begin{cases} \Re(x'_i) &= \lfloor\Re(y'_i)\rceil \\ \Im(x'_i) &= \lfloor\Im(y'_i)\rceil \end{cases}$$

Optionally, in order to make sure that $\mathbf{x}$ belongs to the multi-dimensional QAM modulation, an additional step is required that computes $\mathbf{z}' = \mathbf{T}^{-1}\mathbf{x}'$ and get $\mathbf{z}''$ from

$$\forall i \begin{cases} \Re(z''_i) &= \min(\max(0, \Re(z'_i)), 2^{s_i/2} - 1) \\ \Im(z''_i) &= \min(\max(0, \Im(z'_i)), 2^{s_i/2} - 1) \end{cases}$$

in order to finally obtain $\hat{\mathbf{x}} = \mathbf{Tz}$".

At next step S35, the processor 200 shifts the predetermined list $\mathcal{L}$ around $\hat{\mathbf{x}}$ to produce the list

$$\mathcal{L}_s = \{\mathbf{x} \in \mathbb{Z}[\sqrt{-1}]^N | \mathbf{x} - \hat{\mathbf{x}} \in \mathcal{L}\}.$$ This is for example obtained by computing, for each $\mathbf{x}_{\mathcal{L}} \in \mathcal{L}$, the set of

vectors $\mathbf{x}_{\mathcal{L}} + \hat{\mathbf{x}}$.

At next step S36, the processor 200 removes the vectors of $\mathcal{L}_s$ not belonging to the transformed multi-dimensional constellation $\mathcal{C}_R$ and obtains the list

$$\mathcal{L}_s \cap \mathcal{C}_R .$$

In order to remove the vectors of $\mathcal{L}_s$ not belonging to the transformed multi-dimentional constellation , the processor 200 computes the list

$$\mathcal{L}'_s = \{\mathbf{z} \in$$

$$\mathbb{Z}[\sqrt{-1}]^N | \mathbf{Tz} \in \mathcal{L}_s\}$$

which is the result of transforming the shifted list $\mathcal{L}_s$ by $\mathbf{T}^{-1}$, and then applies the intersection with $\mathcal{C}_.$. Indeed, the implementation of this intersection

$$\mathcal{L}'_s \cap \mathcal{C}$$

is more easy than computing

$$\mathcal{L}_s \cap \mathcal{C}_R$$

directly, and can be performed as follows

for all $\mathbf{z} \in \mathcal{L}'_s$

- check that $\forall i,$ $0 \leq \Re(z_i) \leq 2^{s_i/2} - 1$
- check that $\forall i,$ $0 \leq \Im(z_i) \leq 2^{s_i/2} - 1$
- remove the vector z from $\mathcal{L}'_s$ if one of the check is false

As a result, the list of remaining vectors is

$$\mathcal{L}'_s \cap \mathcal{C},$$

and the list

$$\mathcal{L}_s \cap \mathcal{C}_R$$

is obtained by applying a transformation by **T**.

When the sets of matrices **T** are pre-computed and stored, the list of vectors $\mathcal{L}'_s$ may be precomputed and stored for each possible **T**.

In another option, the processor 200 stores all lists

$$\mathcal{L}_s \cap \ \mathcal{C}_R$$

for all possible values of **T** and $\overset{\wedge}{\mathbf{x}}$.

In another option, the processor 200 stores all lists

$$\mathcal{L}'_s \cap \ \mathcal{C}$$

for all possible values of **T** and $\mathbf{T}^{\text{-1}}\overset{\wedge}{\mathbf{x}}$.

A next step S37, the processor 200 computes the soft estimation of the coded bits according to the list of vectors

$$\mathcal{L}_s \cap \ \mathcal{C}_R \ .$$

According to a prefered mode of realization, the processor 200 computes the LLR according to

$$LLR_j = \log \frac{\sum_{\mathbf{x}\prime \in \{\mathbf{x}\in\mathcal{L}_s \cap \mathcal{C}_R | \Omega_j^{-1}(\mathbf{T}^{-1}\mathbf{x})=1\}} e^{-\rho\|\mathbf{y}-\mathbf{H}_r\mathbf{x}\prime\|^2/2} \prod_{u\neq j} |1-\pi_u-\Omega_u^{-1}(\mathbf{T}^{-1}\mathbf{x}')|}{\sum_{\mathbf{x}\prime\prime \in \{\mathbf{x}\in\mathcal{L}_s \cap \mathcal{C}_R | \Omega_j^{-1}(\mathbf{T}^{-1}\mathbf{x})=0\}} e^{-\rho\|\mathbf{y}-\mathbf{H}_r\mathbf{x}\prime\prime\|^2/2} \prod_{v\neq j} |1-\pi_v-\Omega_v^{-1}(\mathbf{T}^{-1}\mathbf{x}'')|}$$

which requires the list

$$\mathcal{L}_s \cap \ \mathcal{C}_R.$$

In another mode of realization, the processor 200 computes the LLR according to

$$LLR_j = \log \frac{\sum_{\mathbf{z}\prime \in \{\mathbf{z}\in\mathcal{L}'_s \cap \mathcal{C} | \Omega_j^{-1}(\mathbf{z})=1\}} e^{-\rho\|\mathbf{y}-\mathbf{H}\mathbf{z}\prime\|^2/2} \prod_{u\neq j} |1-\pi_u-\Omega_u^{-1}(\mathbf{z}')|}{\sum_{\mathbf{z}\prime\prime \in \{\mathbf{z}\in\mathcal{L}'_s \cap \mathcal{C} | \Omega_j^{-1}(\mathbf{z})=0\}} e^{-\rho\|\mathbf{y}-\mathbf{H}\mathbf{z}\prime\prime\|^2/2} \prod_{v\neq j} |1-\pi_v-\Omega_v^{-1}(\mathbf{z}'')|}$$

which requires the list

$$\mathcal{L}'_s \cap \ \mathcal{C}$$

In another mode of realization, the processor 200 estimates the LLR according to

$$LLR_j$$
$$= \log \frac{\sum_{\mathbf{x}\prime \in \{\mathbf{x}\in\mathcal{L}_s \cap \mathcal{C}_R | \Omega_j^{-1}(\mathbf{T}^{-1}\mathbf{x})=1\}} e^{-\rho\prime\|\mathbf{H}_r^{-1}\mathbf{y}-\mathbf{x}\prime\|^2/2} \prod_{u\neq j} |1-\pi_u-\Omega_u^{-1}(\mathbf{T}^{-1}\mathbf{x}')|}{\sum_{\mathbf{x}\prime\prime \in \{\mathbf{x}\in\mathcal{L}_s \cap \mathcal{C}_R | \Omega_j^{-1}(\mathbf{T}^{-1}\mathbf{x})=0\}} e^{-\rho\prime\|\mathbf{H}_r^{-1}\mathbf{y}-\mathbf{x}\prime\prime\|^2/2} \prod_{v\neq j} |1-\pi_v-\Omega_v^{-1}(\mathbf{T}^{-1}\mathbf{x}'')|}$$

which requires the list

$$\mathcal{L}_s \cap \ \mathcal{C}_R,$$

and where some complexity is saved by computing only once the matrix-vector multiplication $\mathbf{H}_r^{-1}\mathbf{y}$ instead of computing as many matrix-vector multiplications $\mathbf{H}_r\mathbf{x}$ as needed.

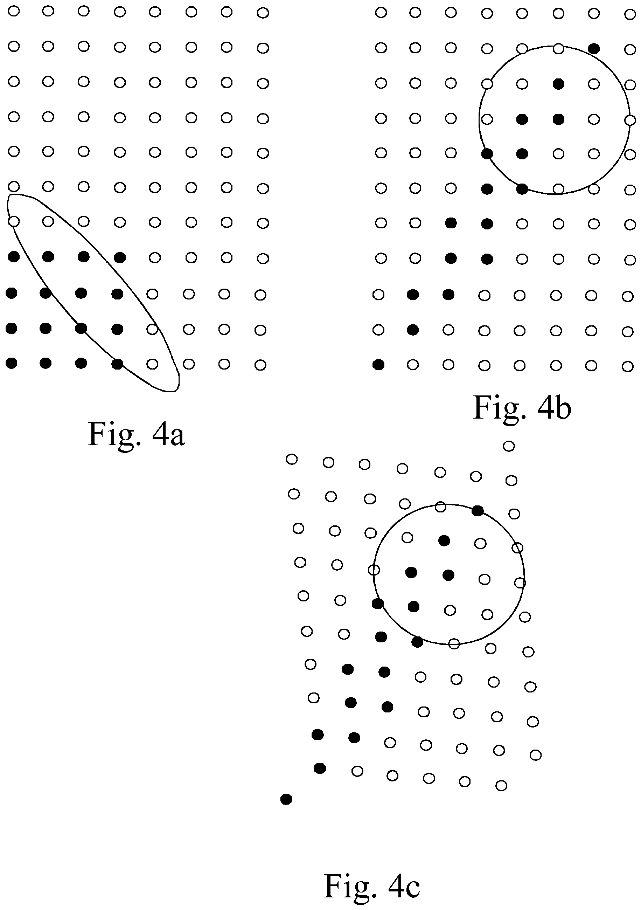

**Figs. 4** represent a geometrical explanation of the constellation transformations by the channel and a lattice reduction.

The Fig. 4a discloses the real parts of a multi-dimensional constellation $\mathcal{C}$ as a constellation of $\mathbb{Z}^2$ wherein N = 2 for the sake of illustration. The vectors

$$\mathbf{z} \in \mathcal{C}$$

are illustrated as the black dots while the white dots are other vectors of $\mathbb{Z}^2$.

After a MIMO channel transformation, the rectangular constellation containing vectors z is skewed into a parallelotopic constellation $\mathcal{C}_O$ containing vectors

$$\mathbf{Hz} \in \mathcal{C}_O$$

observed on Fig. 4c as black dots. The observed lattice marked as white dots are other vectors of the lattice defined by the channel matrix **H**. This corresponds to the **OCM.**

After the channel reduction, the closest representation of the observed lattice with a constellation in $\mathbb{Z}^2$ containing vectors

$$\mathbf{Tz} \in \mathcal{C}_R$$

is shown in Fig. 4b. There is a basis change between Figs. 4a and 4c and the transformed multi-dimentional constellation $\mathcal{C}_R$ is parallelotopic in $\mathbb{Z}^2$. This corresponds to the **RCM.**

We observe that, whatever the channel **H,** the transformation $\mathbf{H}_r$ from Fig. 4b to Fig. 4c is almost orthogonal thanks to the reduced channel property, which involves that a sphere drawn in Fig. 4b, is almost spherical in Fig. 4c after transformation by $\mathbf{H}_r$.

Thus, the present invention aims at drawing a spherical list of vectors in the RCM instead of OCM.

The transformed multi-dimentional constellation $\mathcal{C}_R$ always lies in $\mathbb{Z}[\sqrt{-1}]^N,$ which means that a spherical list of the closest vector to the origin of the lattice may be, according to the present invention, computed once and for all and shifted to a hard estimation of **Tz.**

As the construction of the list of vectors can be done offline, the present invention saves a lot of complexity.

We can observe that the sphere considered in Fig. 4b is skewed into an ellipsoid in Fig. 4a, by the effect of **T**-1.

Also, the transformed multi-dimentional constellation

$$\mathcal{C}_R = \{\mathbf{Tz}\}$$

in Fig. 4b is a skewed version of the rectangular multi-dimentional constellation of the QAM vectors

$$\mathcal{C} = \{\mathbf{z}\}$$

in Fig. 4a, by the effect of **T**.

Thus, **T** plays now the role of an equivalent channel, but has a property of having integer entries and belongs with a high probability to a finite alphabet. The present invention uses this property to further save complexity.

Finally, for computing the soft output detection, only the vectors belonging to the constellation are taken into account requiring then an operation of selection to reject vectors outside the constellation.

Naturally, many modifications can be made to the embodiments of the invention described above without departing from the scope of the present invention.

**Claims**

1.  Method for computing a soft estimate of coded bits forming transmitted symbol vectors of a multi-dimensional constellation, the transmitted vectors being received by a receiver from a source through a channel, wherein the method comprises the steps of:

    - obtaining (S30) from the receiver memory a predetermined list of vectors L with integer or gaussian integer entries,
    - obtaining (S31) a channel matrix estimation **H** between the source and the receiver and received symbols y,
    - obtaining (S32) a reduced channel matrix $\mathbf{H}_r$ and a change of basis matrix **T** from the channel matrix estimation, where **H** = **H**$_r$**T**, **characterized in**
    - computing (S33) a vector with integer coordinates $\hat{\mathbf{x}}$ at least from the reduced channel matrix and the received symbols, the vector with integer coordinates being the closest vector with integer coordinates to an observation

    $$\mathbf{y}' = \mathbf{H}_r^{-1}\mathbf{y},$$

    - shifting (S35) the predetermined list of vectors around the vector with integer coordinates $\hat{\mathbf{x}}$ and obtaining a shifted list of vectors list

    $$\mathcal{L}_s = \{\mathbf{x} \in \mathbb{Z}[\sqrt{-1}]^N | \mathbf{x} - \hat{\mathbf{x}} \in$$

    $$\mathcal{L}\},$$

    - removing (S36) the vectors of $\mathcal{L}_s$ not belonging to a transformed multi-dimensional constellation $\mathcal{C}_R$ which is the set of all possible vectors of symbols x = Tz in order to obtain a list

    $$\mathcal{L}_s \cap \mathcal{C}_R,$$

    - computing (S37) a soft estimation of the coded bits according to the list of vectors

    $$\mathcal{L}_s \cap \mathcal{C}_R$$

    vectors belonging to the shifted list of vectors and to a transformed multi-dimensional constellation obtained from the multi-dimensional constellation and the change of basis matrix.

2.  Method according to claim 1, **characterized in that** the predetermined list of vectors is a spherical predetermined list of vectors around an origin of a lattice or a cubical list of vectors comprising all the vectors having a real and imaginary parts bounded by a lower and an upper bounds.

3.  Method according to claim 1 or 2, **characterized in that** the vector with integer coordinates is obtained by successively applying a MMSE filter computed from the reduced channel matrix and performing a rounding to integer values.

4.  Method according to any of the claims 1 to 2, **characterized in that** the reduced channel matrix is obtained by using Minkovski, Korkine-Zolotarev, or Lenstra Lenstra Lovasz reduction.

5.  Method according to any of the claims 1 to 2, **characterized in that** the reduced channel matrix is obtained by selecting one reduced channel or one change of basis matrix according to a given figure of merit from a set of pre-computed reduced channel or of change of basis matrices.

6. Method according to claim 5, **characterized in that** the figure of merit is the value of the trace of a matrix obtained by a multiplication of the inverse of the reduced channel matrix by the conjugate transpose of the inverse of the reduced channel matrix.

7. Method according to claim 5, **characterized in that** the figure of merit is determined from an upper triangular matrix obtained by a decomposition of the reduced channel matrix into a unitary matrix and the upper triangular matrix.

8. Method according to claim 5, **characterized in that** the set of reduced channels or of change of basis matrices is obtained from an offline pre-processing of channel reduction algorithms on a random set of channel matrices.

9. Method according to claim 8, **characterized in that** the offline pre-processing of channel reduction algorithms on a random set of channel matrices is performed, a given number of times, by obtaining a set of candidate matrices of change of basis matrix, by initializing the set of candidate matrices to an empty set, and an associated vector of probabilities to an empty vector, by generating randomly a channel matrix according to an expected distribution of channels, with centered and unit variance entries, by applying a lattice reduction in order to obtain a change of basis matrix, by adding the obtained change of basis matrix to the set of candidate matrices if the obtained change of basis matrix is not already in the set of candidate matrices or by modifying a probability associated to the obtained change of basis matrix, and selecting a predetermined number of change of basis matrices of the set of candidate matrices having the highest probability.

10. Method according to claim 8, **characterized in that** the offline pre-processing of channel reduction algorithms on a random set of channel matrices is performed, a given number of times, by obtaining a set of candidate matrices of reduced channel matrices, by initializing the set of candidate matrices to an empty set and an associated vector of probabilities to an empty vector, by generating randomly a channel matrix according to an expected distribution of channels, with centered and unit variance entries, by applying a lattice reduction in order to obtain a reduced channel matrix, by adding the obtained reduced channel matrix to the set of candidate matrices if the obtained reduced channel matrix is not already in the set of candidate matrices or by modifying a probability associated to the obtained reduced channel matrix, and selecting a predetermined number of reduced channel matrices of the set of candidate matrices having the highest probability.

11. Method according to claim 5, **characterized in that** the channel matrices are cyclotomic precoded diagonal channels and the set of reduced channel matrix is obtained from an offline pre-processing on a cyclotomic field of a cyclotomic rotation.

12. Method according to any of the claims 1 to 11, **characterized in that** the computing of the soft estimation of the coded bits according to the constellation vectors belonging to the shifted list of vectors is performed by a multiplying of the inverse of the change of basis matrix by the vector with integer coordinates.

13. Method according to any of the claims 1 to 11, **characterized in that** the computing of the soft estimation of the coded bits according to the constellation vectors belonging to the shifted list of vectors is performed using received transmitted symbol vectors through the channel.

14. Device for computing a soft estimate of coded bits forming transmitted symbol vectors of a multi-dimensional constellation, the transmitted vectors being received by a receiver from a source through a channel, wherein the device comprises:

- means for obtaining from the receiver memory a predetermined list of vectors $\mathcal{L}$ with integer or gaussian integer entries,
- means for obtaining a channel matrix estimation **H** between the source and the receiver and received symbols y,
- means for obtaining a reduced channel matrix **Hr** and a change of basis matrix **T** from the channel matrix estimation, where $H = H_r T$,
- means for computing a vector with integer coordinates $\hat{x}$ at least from the reduced channel matrix and the received symbols, the vector with integer coordinates being the closest vector with integer coordinates to an observation
- means for shifting the predetermined list of vectors around the vector with integer coordinates $\hat{x}$ and obtaining a shifted list of vectors list

$$\mathcal{L}_s = \{ \mathbf{x} \in$$

$$\mathbb{Z}[\sqrt{-1}]^N | \mathbf{x} - \hat{\mathbf{x}} \in \mathcal{L} \},$$

**characterized by**

- means for removing the vectors of $\mathcal{L}_s$ not belonging to a transformed multi-dimensional constellation $\mathcal{C}_R$ which is the set of all possible vectors of symbols x = Tz in order to obtain a list

$$\mathcal{L}_s \cap \quad \mathcal{C}_R,$$

- means for computing a soft estimation of the coded bits according to the list of vectors

$$\mathcal{L}_s \cap \quad \mathcal{C}_{R'}$$

vectors belonging to the shifted list of vectors and to a transformed multi-dimensional constellation obtained from the multi-dimensional constellation and the change of basis matrix.

**Patentansprüche**

1. Verfahren zum Berechnen einer weichen Schätzung codierter Bits, die gesendete Symbolvektoren einer mehrdimensionalen Konstellation ausbilden, wobei die gesendeten Vektoren durch einen Empfänger von einer Quelle über einen Kanal empfangen werden, wobei das Verfahren die folgenden Schritte umfasst:

 - Erhalten (S30) einer vorbestimmten Liste von Vektoren $\mathcal{L}$ mit ganzzahligen oder Gaußschen ganzzahligen Einträgen vom Empfängerspeicher,
 - Erhalten (S31) einer Kanalmatrixschätzung **H** zwischen der Quelle und dem Empfänger und empfangener Symbole **y**,
 - Erhalten (S32) einer reduzierten Kanalmatrix $\mathbf{H}_r$ und einer Änderung einer Basismatrix **T** aus der Kanalmatrixschätzung, wobei H = $\mathbf{H}_r\mathbf{T}$,

**gekennzeichnet durch**

 - Berechnen (S33) eines Vektors mit ganzzahligen Koordinaten $\hat{\mathbf{x}}$ wenigstens aus der reduzierten Kanalmatrix und den empfangenen Symbolen, wobei der Vektor mit ganzzahligen Koordinaten der nächste Vektor mit ganzzahligen Koordinaten zu einer Beobachtung $\mathbf{y}' = \mathbf{H}_r^{-1}\mathbf{y}$ ist,
 - Verschieben (S35) der vorbestimmten Liste von Vektoren um den Vektor mit ganzzahligen Koordinaten $\hat{\mathbf{x}}$ und

$$\mathcal{L}_s = \left\{ \mathbf{x} \in \mathbb{Z}[\sqrt{-1}]^N \middle| \mathbf{x} - \hat{\mathbf{x}} \in \mathcal{L} \right\},$$

Erhalten einer verschobenen Liste der Vektorenliste

 - Entfernen (S36) der Vektoren von $\mathcal{L}_{s'}$, die nicht zu einer transformierten mehrdimensionalen Konstellation $\mathcal{C}_R$ gehören, die die Gruppe von allen möglichen Vektoren von Symbolen **x = Tz** ist, um eine Liste

$$\mathcal{L}_s \cap \mathcal{C}_R$$

zu erhalten,
 - Berechnen (S37) einer weichen Schätzung der codierten Bits gemäß der Liste von Vektoren

$$\mathcal{L}_s \cap \mathcal{C}_R,$$

die zu der verschobenen Liste von Vektoren und zu einer aus der mehrdimensionalen Konstellation und der Änderung einer Basismatrix erhaltenen transformierten mehrdimensionalen Konstellation gehören.

2. Verfahren nach Anspruch 1, **dadurch gekennzeichnet, dass** die vorbestimmte Liste von Vektoren eine sphärische vorbestimmte Liste von Vektoren um einen Ursprung eines Gitters oder eine kubische Liste von Vektoren, umfassend alle Vektoren mit einem Real- und einem Imaginärteil, begrenzt durch eine untere und eine obere Grenze, ist.

3. Verfahren nach Anspruch 1 oder 2, **dadurch gekennzeichnet, dass** der Vektor mit ganzzahligen Koordinaten durch aufeinanderfolgendes Anwenden eines MMSE-Filters, das aus der reduzierten Kanalmatrix berechnet ist, und Durchführen einer Rundung an ganzzahligen Werten erhalten wird.

4. Verfahren nach einem der Ansprüche 1 bis 2, **dadurch gekennzeichnet, dass** die reduzierte Kanalmatrix durch Verwenden einer Minovski-, Korkine-Zolotarev- oder Lenstra-Lenstra-Loväsz-Reduktion erhalten wird.

5. Verfahren nach einem der Ansprüche 1 bis 2, **dadurch gekennzeichnet, dass** die reduzierte Kanalmatrix durch Auswählen eines reduzierten Kanals oder einer Änderung einer Basismatrix gemäß einem gegebenen Bewertungsfaktor aus einer Gruppe eines vorberechneten reduzierten Kanals oder einer Änderung von Basismatrizen erhalten wird.

6. Verfahren nach Anspruch 5, **dadurch gekennzeichnet, dass** der Bewertungsfaktor der Wert der Ablaufverfolgung einer Matrix ist, erhalten durch eine Multiplikation der inversen der reduzierten Kanalmatrix mit der konjugierten transponierten der inversen der reduzierten Kanalmatrix.

7. Verfahren nach Anspruch 5, **dadurch gekennzeichnet, dass** der Bewertungsfaktor aus einer oberen Dreiecksmatrix bestimmt wird, erhalten durch eine Zerlegung der reduzierten Kanalmatrix in eine unitäre Matrix und die obere Dreiecksmatrix.

8. Verfahren nach Anspruch 5, **dadurch gekennzeichnet, dass** die Gruppe von reduzierten Kanälen oder einer Änderung von Basismatrizen aus einer Offline-Vorverarbeitung von Kanalreduktionsalgorithmen an einer zufälligen Gruppe von Kanalmatrizen erhalten wird.

9. Verfahren nach Anspruch 8, **dadurch gekennzeichnet, dass** die Offline-Vorverarbeitung von Kanalreduktionsalgorithmen an einer zufälligen Gruppe von Kanalmatrizen durchgeführt wird, für eine gegebene Anzahl von Malen, durch Erhalten einer Gruppe von Kandidatenmatrizen einer Änderung einer Basismatrix, durch Initialisieren der Gruppe von Kandidatenmatrizen zu einer leeren Gruppe und eines assoziierten Vektors von Wahrscheinlichkeiten zu einem leeren Vektor, durch zufälliges Erzeugen einer Kanalmatrix gemäß einer erwarteten Verteilung von Kanälen mit zentrierten und Einheits-Varianzeinträgen, durch Anwenden einer Gitterreduktion, um eine Änderung einer Basismatrix zu erhalten, durch Addieren der erhaltenen Änderung einer Basismatrix zu der Gruppe von Kandidatenmatrizen, wenn die erhaltene Änderung einer Basismatrix nicht bereits in der Gruppe von Kandidatenmatrizen ist, oder durch Modifizieren einer mit der erhaltenen Änderung einer Basismatrix assoziierten Wahrscheinlichkeit und Auswählen einer vorbestimmten Anzahl einer Änderung von Basismatrizen der Gruppe von Kandidatenmatrizen mit der höchsten Wahrscheinlichkeit.

10. Verfahren nach Anspruch 8, **dadurch gekennzeichnet, dass** die Offline-Vorverarbeitung von Kanalreduktionsalgorithmen an einer zufälligen Gruppe von Kanalmatrizen durchgeführt wird, eine gegebene Anzahl von Malen, durch Erhalten einer Gruppe von Kandidatenmatrizen von reduzierten Kanalmatrizen, durch Initialisieren der Gruppe von Kandidatenmatrizen zu einer leeren Gruppe und eines assoziierten Vektors von Wahrscheinlichkeiten zu einem leeren Vektor, durch zufälliges Erzeugen einer Kanalmatrix gemäß einer erwarteten Verteilung von Kanälen mit zentrierten und Einheits-Varianzeinträgen, durch Anwenden einer Gitterreduktion, um eine reduzierte Kanalmatrix zu erhalten, durch Addieren der erhaltenen reduzierten Kanalmatrix zu der Gruppe von Kandidatenmatrizen, wenn die erhaltene reduzierte Kanalmatrix nicht bereits in der Gruppe von Kandidatenmatrizen ist, oder durch Modifizieren einer mit der erhaltenen reduzierten Kanalmatrix assoziierten Wahrscheinlichkeit und Auswählen einer vorbestimmten Anzahl von reduzierten Kanalmatrizen der Gruppe von Kandidatenmatrizen mit der höchsten Wahrscheinlichkeit.

11. Verfahren nach Anspruch 5, **dadurch gekennzeichnet, dass** die Kanalmatrizen zyklotomische vorcodierte diagonale Kanäle sind und die Gruppe einer reduzierten Kanalmatrix erhalten wird aus einer Offline-Vorverarbeitung an einem zyklotomischen Feld einer zyklotomischen Rotation

**12.** Verfahren nach einem der Ansprüche 1 bis 11, **dadurch gekennzeichnet, dass** das Berechnen der weichen Schätzung der codierten Bits gemäß den Konstellationsvektoren, die zu der verschobenen Liste von Vektoren gehören, durch ein Multiplizieren des Inversen der Änderung einer Basismatrix mit dem Vektor mit ganzzahligen Koordinaten durchgeführt wird.

**13.** Verfahren nach einem der Ansprüche 1 bis 11, **dadurch gekennzeichnet, dass** das Berechnen der weichen Schätzung der codierten Bits gemäß den Konstellationsvektoren, die zu der verschobenen Liste von Vektoren gehören, unter Verwendung von empfangenen über den Kanal gesendeten Symbolvektoren durchgeführt wird.

**14.** Vorrichtung zum Berechnen einer weichen Schätzung codierter Bits, die gesendete Symbolvektoren einer mehrdimensionalen Konstellation ausbilden, wobei die gesendeten Vektoren durch einen Empfänger von einer Quelle über einen Kanal empfangen werden, wobei die Vorrichtung folgendes umfasst:

- Mittel zum Erhalten einer vorbestimmten Liste von Vektoren L mit ganzzahligen oder Gaußschen ganzzahligen Einträgen vom Empfängerspeicher,
- Mittel zum Erhalten einer Kanalmatrixschätzung **H** zwischen der Quelle und dem Empfänger und empfangener Symbole **y**,
- Mittel zum Erhalten einer reduzierten Kanalmatrix $\mathbf{H}_r$ und einer Änderung einer Basismatrix **T** aus der Kanalmatrixschätzung, wobei $\mathbf{H} = \mathbf{H}_r\mathbf{T}$,
- Mittel zum Berechnen eines Vektors mit ganzzahligen Koordinaten $\hat{\mathbf{x}}$ wenigstens aus der reduzierten Kanalmatrix und den empfangenen Symbolen, wobei der Vektor mit ganzzahligen Koordinaten der nächste Vektor mit ganzzahligen Koordinaten zu einer Beobachtung $\mathbf{y}' = \mathbf{H}_r^{-1}\mathbf{y}$ ist,
- Mittel zum Verschieben der vorbestimmten Liste von Vektoren um den Vektor mit ganzzahligen Koordinaten $\hat{\mathbf{x}}$ und Erhalten einer verschobenen Liste der Vektorenliste $\mathcal{L}_s = \left\{\mathbf{x} \in \mathbb{Z}\left[\sqrt{-1}\right]^N \middle| \mathbf{x} - \hat{\mathbf{x}} \in \mathcal{L}\right\}$,

**gekennzeichnet durch**

- Mittel zum Entfernen der Vektoren von $\mathcal{L}_s$, die nicht zu einer transformierten mehrdimensionalen Konstellation $\mathcal{C}_R$ gehören, die die Gruppe von allen möglichen Vektoren von Symbolen $\mathbf{x} = \mathbf{Tz}$ ist, um eine Liste

$$\mathcal{L}_s \cap \mathcal{C}_R$$

zu erhalten,
- Mittel zum Berechnen einer weichen Schätzung der codierten Bits gemäß der Liste von Vektoren

$$\mathcal{L}_s \cap \mathcal{C}_R,$$

die zu der verschobenen Liste von Vektoren und zu einer aus der mehrdimensionalen Konstellation und der Änderung einer Basismatrix erhaltenen transformierten mehrdimensionalen Konstellation gehören.

**Revendications**

**1.** Procédé de calcul d'une estimation souple de bits codés formant des vecteurs de symboles transmis d'une constellation multidimensionnelle, les vecteurs transmis étant reçus par un récepteur d'une source à travers un canal, dans lequel le procédé comporte les étapes de :

- obtention (S30) de la mémoire du récepteur d'une liste prédéterminée de vecteurs L avec des entiers ou des entrées gaussiennes entières,

- obtention (S31) d'une estimation de matrice de canal H entre la source et le récepteur et de symboles reçus y,
- obtention (S32) d'une matrice de canal réduite $\mathbf{H_r}$ et d'une matrice de changement de base $\mathbf{T}$ à partir de l'estimation de matrice de canal, où $\mathbf{H} = \mathbf{H}_r\mathbf{T}$ ,

**caractérisé en ce que** :

- calcul (S33) d'un vecteur avec des coordonnées entières $\hat{\mathbf{x}}$ au moins à partir de la matrice de canal réduite et des symboles reçus, le vecteur avec des coordonnées entières étant le vecteur le plus proche avec des coordonnées entières d'une observation $\mathbf{y}' = \mathbf{H}_r^{-1}\mathbf{y}$ ,
- décalage (S35) de la liste prédéterminée de vecteurs autour du vecteur avec des coordonnées entières $\hat{\mathbf{x}}$ et obtention d'une liste décalée de la liste de vecteurs

$$\mathcal{L}_s =$$

$$\{\mathbf{x} \in \mathbb{Z}[\sqrt{-1}]^N | \mathbf{x} - \hat{\mathbf{x}} \in \mathcal{L}\},$$

- suppression (S36) des vecteurs de $\mathcal{L}_s$ n'appartenant pas à une constellation multi-dimensionnelle transformée $\mathcal{C}_R$ qui est l'ensemble de tous les vecteurs possibles de symboles $\mathbf{x} = Tz$ pour obtenir une liste

$$\mathcal{L}_s \cap \quad \mathcal{C}_R$$

- calcul (S37) d'une estimation souple des bits codés selon la liste des vecteurs

$$\mathcal{L}_s \cap \quad \mathcal{C}_R$$

appartenant à la liste de vecteurs décalée et à une constellation multidimensionnelle transformée obtenue à partir de la constellation multidimensionnelle et de la matrice de changement de base.

2. Procédé selon la revendication 1, **caractérisé en ce que** la liste prédéterminée de vecteurs est une liste prédéterminée sphérique de vecteurs autour d'une origine d'une liste de vecteurs de lattice ou une liste cubique comprenant tous les vecteurs ayant une partie réelle et imaginaire délimitée par des limites inférieure et supérieure.

3. Procédé selon la revendication 1 ou 2, **caractérisé en ce que** le vecteur avec des coordonnées entières est obtenu en appliquant successivement un filtre MMSE calculé à partir de la matrice de canal réduite et en effectuant un arrondi à des valeurs entières.

4. Procédé selon l'une quelconque des revendications 1 à 2, **caractérisé en ce que** la matrice de canal réduite est obtenue en utilisant une réduction de Minkovski, Korkine-Zolotarev, ou de Lenstra Lenstra Lovász.

5. Procédé selon l'une quelconque des revendications 1 à 2, **caractérisé en ce que** la matrice de canal réduite est obtenue en sélectionnant un canal réduit ou un changement de matrice de base selon une figure de mérite donnée à partir d'un ensemble de canaux réduits pré-calculé ou de matrices de changement de base.

6. Procédé selon la revendication 5, **caractérisé en ce que** la figure de mérite est la valeur de la trace d'une matrice obtenue par une multiplication de l'inverse de la matrice de canal réduite par la transposée conjuguée de l'inverse de la matrice de canal réduite.

7. Procédé selon la revendication 5, **caractérisé en ce que** la figure de mérite est déterminée à partir d'une matrice triangulaire supérieure obtenue par une décomposition de la matrice de canal réduite en une matrice unitaire et la matrice triangulaire supérieure.

8. Procédé selon la revendication 5, **caractérisé en ce que** l'ensemble de canaux réduits ou de matrices de changement de base est obtenu à partir d'un prétraitement hors ligne d'algorithmes de réduction de canal sur un ensemble aléatoire de matrices de canal.

9. Procédé selon la revendication 8, **caractérisé en ce que** le prétraitement hors ligne d'algorithmes de réduction de canal sur un ensemble aléatoire de matrices de canal est effectué, un nombre de fois donné, en obtenant un ensemble de matrices candidates de changement de matrice de base, en initialisant l'ensemble des matrices candidates à un ensemble vide, et un vecteur associé de probabilités à un vecteur vide, en générant aléatoirement une matrice de canal selon une distribution attendue de canaux, avec des entrées de variance centrées et unitaires, en appliquant une réduction de lattice pour obtenir une matrice de changement de base, en ajoutant la matrice de changement de base obtenue à l'ensemble des matrices candidates si la matrice de changement de base obtenue n'est pas déjà dans l'ensemble des matrices candidates ou en modifiant une probabilité associée à la matrice de changement de base obtenue, et en sélectionnant un nombre prédéterminé de matrices de changement de base de l'ensemble de matrices candidates ayant la probabilité la plus élevée.

10. Procédé selon la revendication 8, **caractérisé en ce que** le prétraitement hors ligne des algorithmes de réduction de canal sur un ensemble aléatoire de matrices de canaux est effectué, un nombre de fois déterminé, en obtenant un ensemble de matrices candidates de matrices de canal réduites, en initialisant l'ensemble des matrices candidates à un ensemble vide et un vecteur associé de probabilités à un vecteur vide, en générant aléatoirement une matrice de canal selon une distribution attendue de canaux, avec des entrées de variance centrées et unitaires, en appliquant une réduction de lattice pour obtenir une matrice de canal réduite, en ajoutant la matrice de canal réduite obtenue à l'ensemble des matrices candidates si la matrice de canal réduite obtenue n'est pas déjà dans l'ensemble des matrices candidates ou en modifiant une probabilité associée à la matrice de canal réduite obtenue, et en sélectionnant un nombre prédéterminé de matrices de canal réduites de l'ensemble des matrices candidates ayant la probabilité la plus élevée.

11. Procédé selon la revendication 5, **caractérisé en ce que** les matrices de canal sont des canaux diagonaux précodés cyclotomiques et l'ensemble de matrices de canal réduites est obtenu à partir d'un prétraitement hors ligne sur un champ cyclotomique d'une rotation cyclotomique.

12. Procédé selon l'une quelconque des revendications 1 à 11, **caractérisé en ce que** le calcul de l'estimation souple des bits codés selon les vecteurs de constellation appartenant à la liste décalée de vecteurs est effectué par une multiplication de l'inverse de la matrice de changement de base par le vecteur avec des coordonnées entières.

13. Procédé selon l'une quelconque des revendications 1 à 11, **caractérisé en ce que** le calcul de l'estimation souple des bits codés selon les vecteurs de constellation appartenant à la liste décalée de vecteurs est effectué en utilisant des vecteurs de symboles transmis reçus à travers le canal.

14. Dispositif de calcul d'une estimation souple de bits codés formant des vecteurs de symboles transmis d'une constellation multidimensionnelle, les vecteurs transmis étant reçus par un récepteur d'une source à travers un canal, dans lequel le dispositif comporte :

 - des moyens d'obtention de la mémoire du récepteur d'une liste prédéterminée de vecteurs L avec des entiers ou des entrées gaussiennes entières,
 - des moyens d'obtention d'une estimation de matrice de canal H entre la source et le récepteur et de symboles reçus y,
 - des moyens d'obtention d'une matrice de canal réduite $\mathbf{H_r}$ et d'une matrice de changement de base $\mathbf{T}$ à partir de l'estimation de matrice de canal, où $\mathbf{H} = \mathbf{H_r T}$,

**caractérisé par**

 - des moyens de calcul d'un vecteur avec des coordonnées entières **x** au moins à partir de la matrice de canal réduite et des symboles reçus, le vecteur avec des coordonnées entières étant le vecteur le plus proche avec des coordonnées entières d'une observation $\mathbf{y}' = \mathbf{H}_r^{-1}\mathbf{y}$,

- des moyens de décalage de la liste prédéterminée de vecteurs autour du vecteur avec des coordonnées entières $\hat{\mathbf{x}}$ et obtention d'une liste décalée de la liste de vecteurs $\mathcal{L}_s = \{\mathbf{x} \in \mathbb{Z}[\sqrt{-1}]^N \mid \mathbf{x} - \hat{\mathbf{x}} \in \mathcal{L}\}$,

- des moyens de suppression des vecteurs de $\mathcal{L}_s$ n'appartenant pas à une constellation multi-dimensionnelle transformée $\mathcal{C}_R$ qui est l'ensemble de tous les vecteurs possibles de symboles $\mathbf{x}$ = Tz pour obtenir une liste

$$\mathcal{L}_s \cap \mathcal{C}_R$$

- des moyens de calcul d'une estimation souple des bits codés selon la liste des vecteurs

$$\mathcal{L}_s \cap \mathcal{C}_R$$

appartenant à la liste de vecteurs décalée et à une constellation multidimensionnelle transformée obtenue à partir de la constellation multidimensionnelle et de la matrice de changement de base.

Src

Source

Rec

## Fig. 1

Rec

200 — Processor

203 — RAM

Wireless I/F — 205

Ant

201

202 — ROM

## Fig. 2

S30 — Computation of spherical list

S31 — Receive observation and channel estimation

S32 — Obtain channel reduction

S33 — Compute new observation of the RCM

S34 — Find estimation of the closest point in the RCM

S35 — Shift the spherical list

S36 — Remove points not belonging to the parellelotopic constellation

S37 — Compute soft estimation

Fig. 3

Fig. 4a

Fig. 4b

Fig. 4c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **U. FINKCE ; M. POHST.** Improved Methods for calculating Vectors of short length in a Lattice including a complexity analysis. *Mathematics of computation,* 1985, vol. 44, 463
- **A LENSTRA ; H LENSTRA ; L. LOVASZ.** Factoring polynomials with rational coefficients. *Mathematische Annalen,* 1982, vol. 261, 515-532
- **C. LING W. H MOW ; N. HOWGRAVE-GRAHAM.** Variants of the LLL algorithm in digital communications. Complexity analysis and fixed complexity implementation. *Computing Research Repository,* 2010, vol. 1661
- **C.P SCHNORR.** A hierarchy of polynomial time lattice basis reduction algorithms. *Theoretical Computer Science,* 1987, vol. 53, 201-224